# EUROPEAN PATENT APPLICATION

(11) **EP 2 337 349 A1**
(43) Date of publication of application: **22.06.2011**
(21) Application number: 09848577.4
(22) Date of filing: 20.10.2009
(51) Int. Cl.: H04N 7/173

(54) **CONTENT DISTRIBUTION APPARATUS AND SYSTEM**

(71) Applicant: Hitachi Solutions, Ltd., Tokyo 140-0002 (JP)
(72) Inventor: NAKAMURA, Yuichi, (JP); YADA, Tomoki, (JP); NOBUOKA, Shinya, (JP)
(74) Representative: Liesegang, Eva
(86) International application number: PCT/JP2009/005475
(87) International publication number: WO 2011/048625

(57) **Abstract**

To provide a means for viewing contents on the Internet using a player having the function of viewing contents on an in-house network, without installing software in the player.

A gateway apparatus mediating between the in-house network and the Internet is provided with a mediation program; the in-house network or the Internet is provided with a conversion server; the mediation program acquires a contents list from an Internet dynamic-image site and converts the contents list to a data format displayable by the player; the player displays the contents list to enable a user to make a selection; the mediation program transfers, to the conversion server, a contents acquirement request selected from the contents list displayed in the player; the conversion server acquires a dynamic image from the dynamic-image site, converts the dynamic image to a format regenerable by the player and transmits it to the player via the gateway apparatus; and the player regenerates the received dynamic-image data.

## Description

### Background of the Invention

### Field of the Invention;

The present invention relates to a delivery of contents, particularly, a delivery of dynamic-image contents.

### Description of the related art:

Contents stored in equipment connected to a home network can be viewed in a player device such as a television, and the viewing art has become widespread, for example, including an art offered by Japanese Patent Laid-Open Publication No. 2007-158854. As a popular industry standard, there is a DLNA guideline (below called the DLNA) in which a player requests a contents list from equipment within a home network, is sent the contents list as data of a directory structure (called the contents directory) by the equipment, selects contents from the contents directory, acquires the contents from the equipment and regenerates them.

Player devices based on the DLNA have come into wide use for televisions. However, the DLNA-based players are designed to view contents stored in a storage device (such as a network storage device and a video-recorder device) within a home network, and hence, they are not designed to acquire and view contents external to the home network such as contents on the Internet. On the other hand, dynamic images on the Internet have recently become popular, raising a great demand for viewing, on television, dynamic images in dynamic-image sites on the Internet. In order to view such dynamic images on television, software needs to be separately installed on the side of a television. However, in general, a user is not permitted to install the software on the television side for himself or herself.

### Summary of the Invention

It is a problem to be solved by the present invention to provide a means for viewing contents on the Internet using a player device capable of acquiring and viewing contents on a home network, without installing new software in the player device.

In order to solve the problem, in a gateway apparatus mediating between a player connected to an in-house LAN such as a home network and the Internet, a mediation program is provided which includes a means for acquiring a dynamic-image list from a dynamic-image site, converting dynamic-image list data into a contents directory and transmitting the contents directory to the player device. The player includes a means for displaying the contents directory received from the mediation program and allowing a user to select contents and transmits an acquirement request for the selected contents to the gateway apparatus. The mediation program in the gateway apparatus transmits the contents acquirement request to a transcoding server on the Internet or on the in-house network. On the basis of the received contents acquirement request, the transcoding server acquires dynamic-image data from the dynamic-image site, converts the acquired dynamic-image data to a format regenerable by the player and transmits it to the player via the gateway apparatus. Then, the player regenerates the received dynamic-image data.

Some changes can be unexpectedly made in means for acquiring a dynamic-image list from an Internet dynamic-image site, or popular dynamic-image sites may be newly created. Such changes in the situation require that the mediation program provided in the gateway apparatus should be updated. In general, a program provided in the gateway apparatus is updated by updating firmware, thereby involving stopping or restarting the apparatus to deteriorate the availability of the in-house network during such an operation. In order to update the mediation program without stopping or restarting the apparatus, the mediation program is operated using a software management framework such as an OSGi framework for installing and uninstalling software in a module unit. This makes it possible to update the mediation program without stopping the gateway apparatus.

According to the present invention, even if only contents on the in-house network are viewable and the contents of a dynamic-image site A are not viewable in a player 111, then without adding software to the player 111 or substituting software, a dynamic-image list of the dynamic-image site A can be displayed and a dynamic image thereof becomes viewable in the player 111.

In addition, advertising results data 440 is utilized, thereby enabling a dynamic-image site to collect an advertising rate. For example, a line 941 indicates the frequency of broadcasts for an advertisement corresponding to an advertisement ID 1 by way of the dynamic-image site A. This makes it possible for an administrator of the dynamic-image site A to charge an advertiser of the advertisement ID 1 an advertising rate according to advertising results.

Furthermore, a dynamic image in a new dynamic-image site B also becomes viewable in the player 111, without stopping a gateway apparatus 120. This can be implemented only by allowing a bundle delivering means 510 of a device management server 132 to install a dynamic-image site bundle B having a similar function to a dynamic-image site bundle A (the dynamic-image site bundle B is different from the dynamic-image site bundle A in the respect of a dynamic-image list acquiring means at a step 1310 in a contents-directory creation function 710) using a software management framework 320 of the gateway apparatus 120.

### Brief Description of the drawings

Fig. 1 is a schematic view showing a hardware configuration of the whole of a system.
Fig. 2 is a block diagram showing a software configuration of a player.
Fig. 3 is a block diagram showing a configuration of a gateway apparatus.
Fig. 4 is a block diagram showing a configuration of a transcoding server.
Fig. 5 is a block diagram showing a configuration of a device management server.
Fig. 6 is a block diagram showing a configuration of a dynamic-image site A, B.
Fig. 7 is a blockdiagram showing a configuration of a dynamic-image site-A bundle.
Fig. 8 is a table showing a configuration of advertisement data.
Fig. 9 is a table showing a configuration of advertising results data.
Fig. 10 is a table showing a configuration of dynamic-image list data.
Fig. 11 is a table showing a configuration of a contents directory.
Fig. 12 is a table showing a configuration of an ID dynamic-image-related table.
Fig. 13 is a flow chart showing a contents-directory creation function.
Fig. 14 is a flow chart showing a processing executed by a transcoding means.
Fig. 15 is a block diagram showing a contents-directory acquiring/displaying means.
Fig. 16 is a block diagram showing contents regeneration.

### Detailed Description of the Invention

An embodiment of the present invention will be below described with reference to the drawings. In the present invention, the word "means" is used as the meaning of "a means for implementing a function". It is equivalent to a means which is implemented by allowing a computer program (software or firmware) activating a CPU of a server or a built-in CPU (including an MPU: Micro Processor Unit) of digital equipment to come into operation after the computer program is read by the CPU. Therefore, if the state where the CPU reads the necessary computer program and is in operation is captured, the "means" is a concept which can be grasped as an "object". Similarly, the word "function" is a function which is implemented by the computer program. Therefore, if the state where the function is exactly implemented is captured, then the function is implemented by the CPU and thereby can be read as the "means" instead.

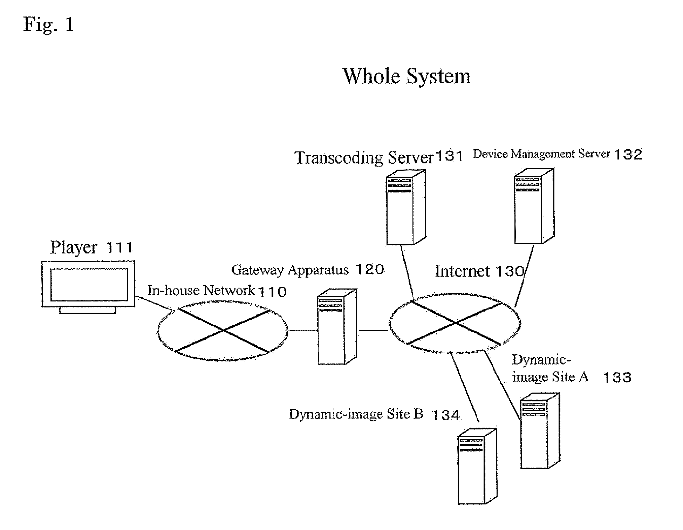

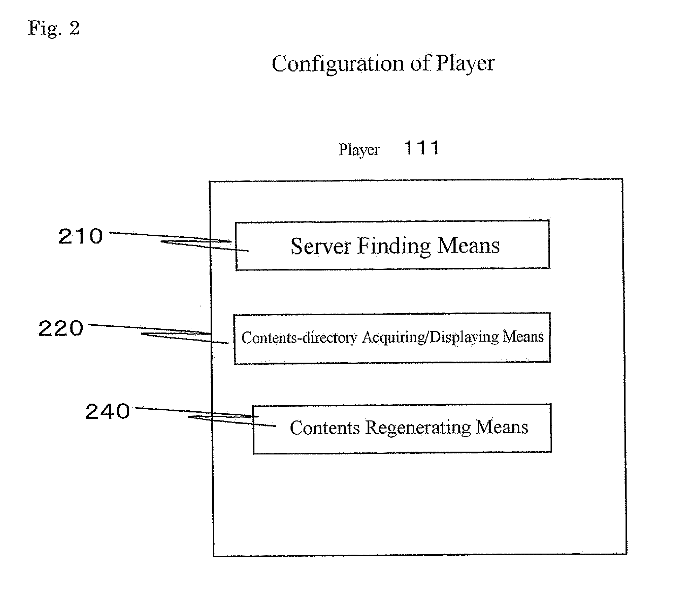

Fig. 1 is a schematic view showing a hardware configuration of the whole of a system. A player 111 and a gateway apparatus 120 are connected by wire or radio to an in-house network 110, and among these pieces of equipment, broadcast communication is conducted. The player 111 includes hardware (a CPU, a main storage device and a network communication interface) as a computer having a network communication function and a display. The player 111 has a means for acquiring and displaying contents list data (a contents directory) having a hierarchical structure and allowing a user to select contents using a remote control or the like and has the function of acquiring the selected contents from a network and regenerating the acquired contents. A detailed configuration of the software will be described with reference to Fig. 2.

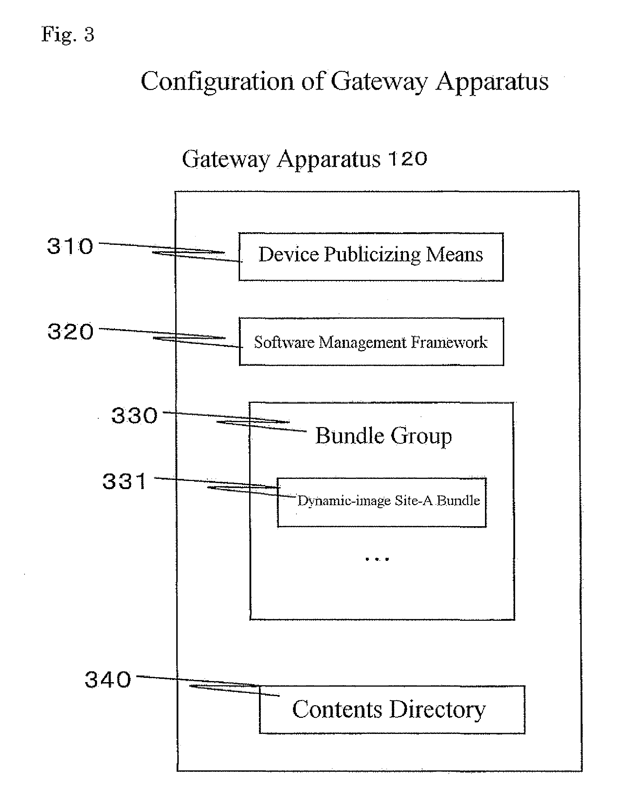

The gateway apparatus 120 includes hardware (a CPU, a main storage device and at least two network communication interfaces) as a computer having a network communication function. The gateway apparatus 120 is connected to the in-house network 110 and the Internet 130 and relays communication between the Internet 130 and the in-house network 110. A detailed configuration thereof will be described with reference to Fig. 3.

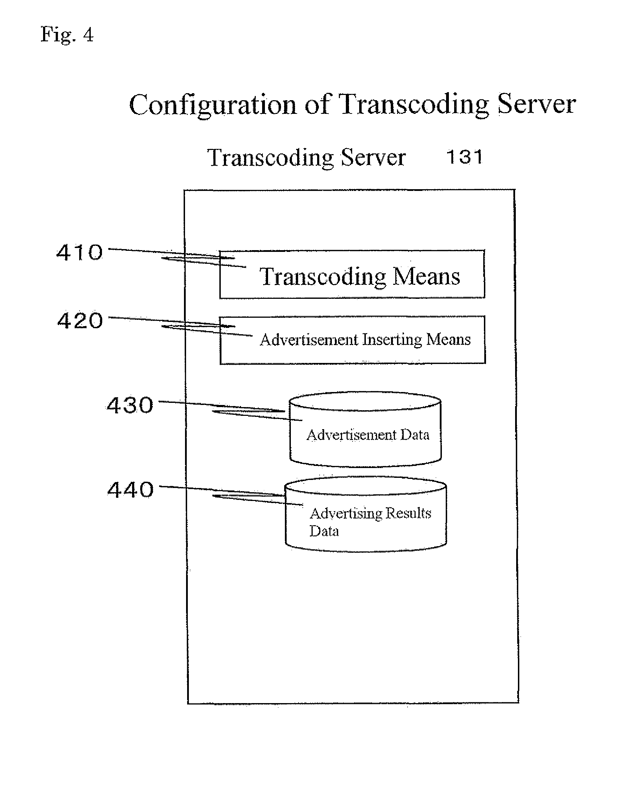

A transcoding server 131 includes hardware (a CPU, a main storage device, a network communication interface and an auxiliary storage device such as an HDD) as a computer having a network communication function and has the function of converting a dynamic-image data format. A detailed configuration thereof will be below described with reference to Fig. 4.

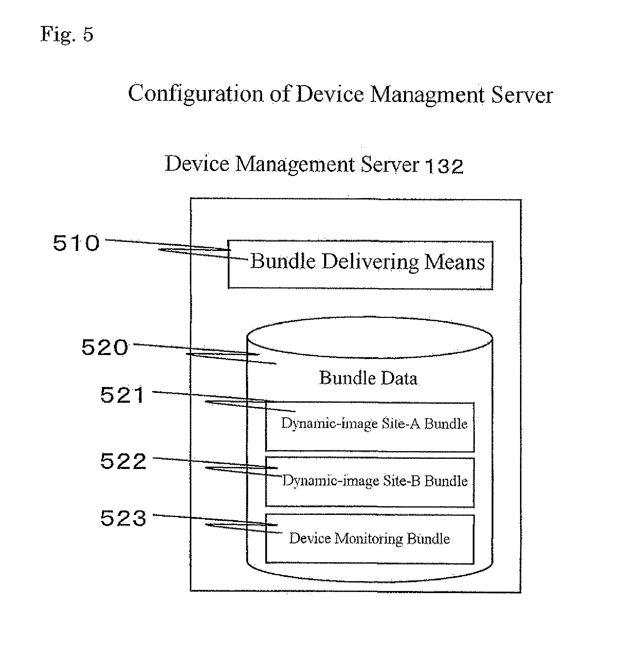

A device management server 132 is an apparatus managing the gateway apparatus 120 and includes hardware (a CPU, a main storage device, a network communication interface and an auxiliary storage device such as an HDD) as a computer having a network communication function. A detailed configuration thereof will be below described with reference to Fig. 5.

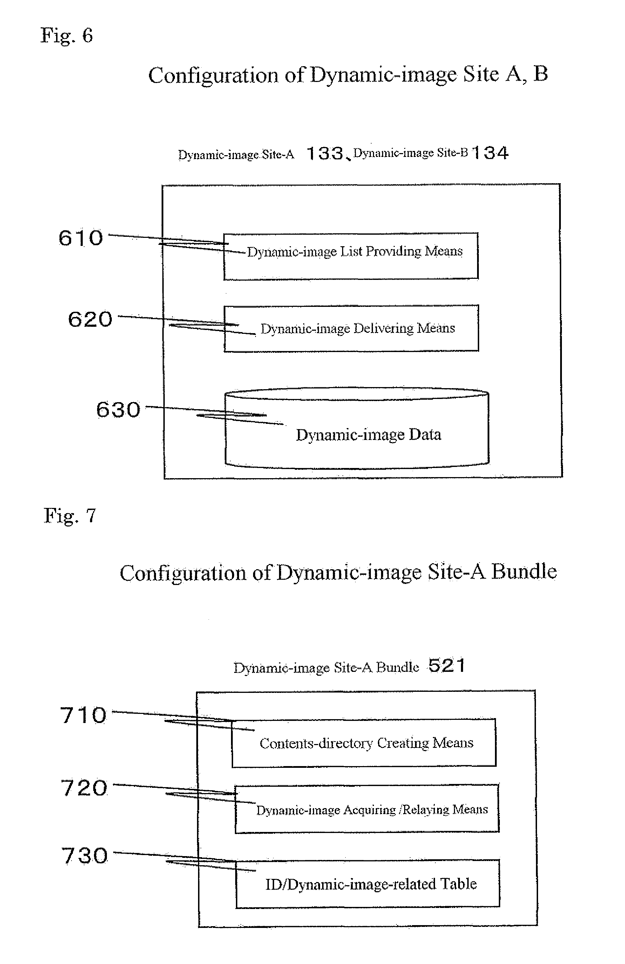

A dynamic-image site-A 133 is a dynamic-image delivery server on the Internet administered by a dynamic-image delivery company A and a dynamic-image site-B 134 is a dynamic-image delivery server on the Internet administered by a dynamic-image delivery company B. These dynamic-image delivery servers include hardware (a CPU, a main storage device, a network communication interface and an auxiliary storage device such as an HDD) as a computer having a network communication function. A detailed configuration thereof will be below described with reference to Fig. 6.

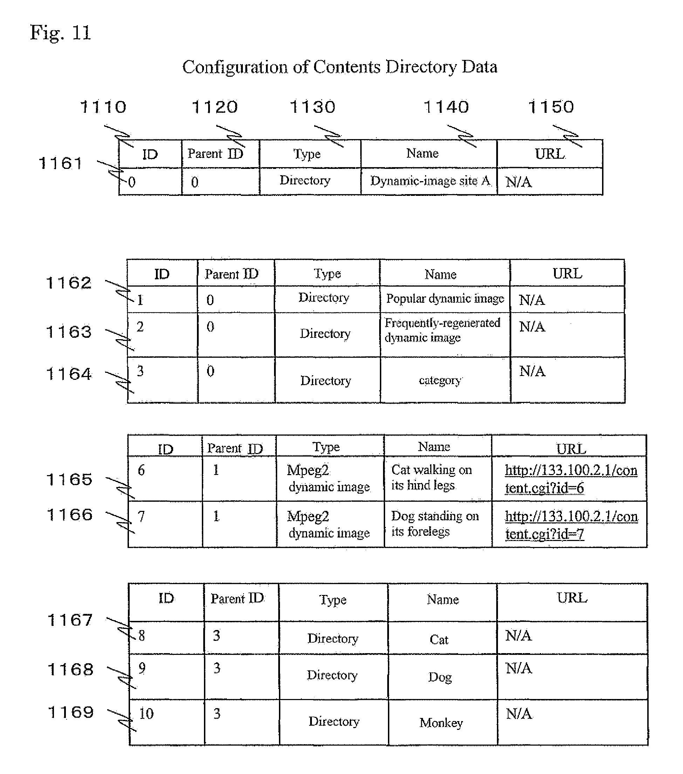

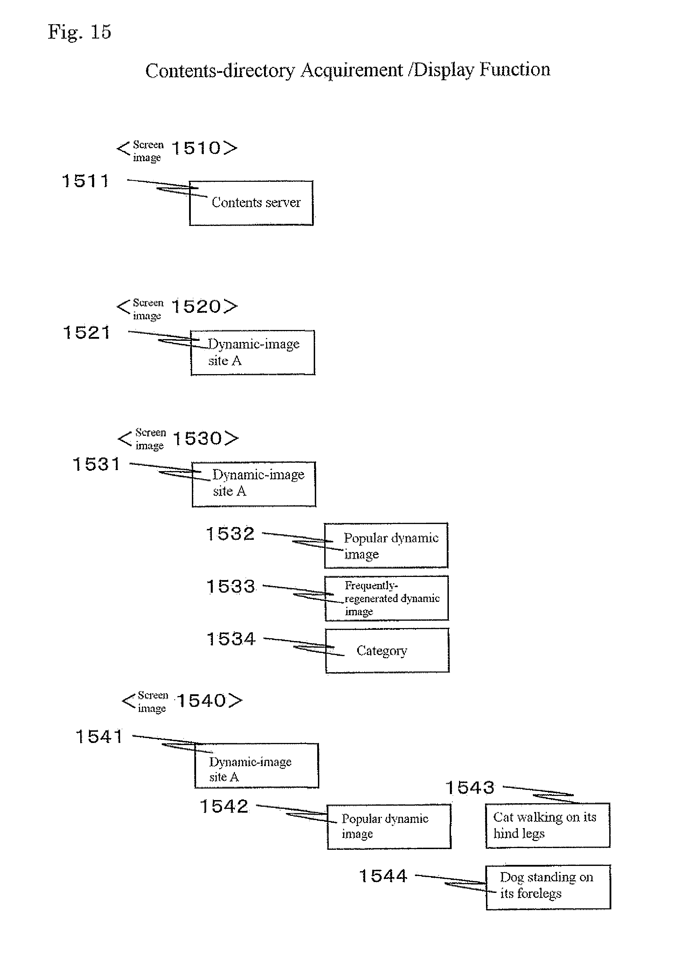

Fig. 2 is a block diagram showing a software configuration of the player 111. A server finding means 210 is a function implementing means for finding a device having a contents delivery function which is connected to the in-house network 110. The server finding means 210 transmits a broadcast including a device-finding request message to each device connected to the in-house network 110, then is sent a function held by each device in reply and thereby finds a device having a contents delivery function. This device finding is feasible, for example, by embodying the uPnP DA standard. A contents-directory acquiring/displaying means 220 is the function of acquiring data called a contents-directory and displaying it on the display of the player 111. A data configuration of the contents directory will be described in Fig. 11 and the details of a processing executed by the contents-directory acquiring/displaying means 220 will be described in Fig. 15.

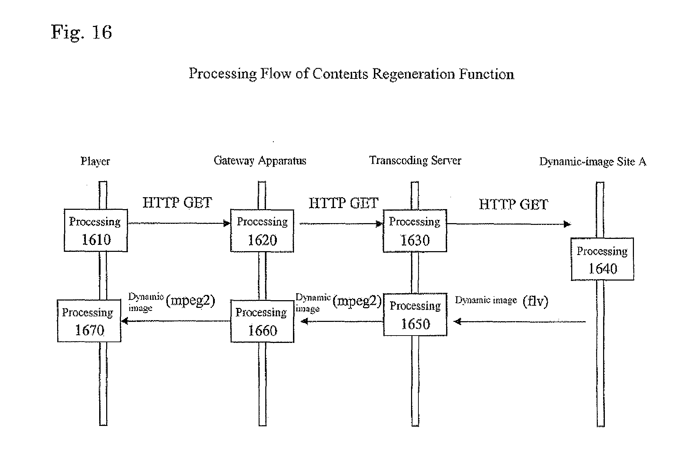

A contents regenerating means 240 is the function of transmitting a contents identifier (e.g., a URL) to a device having a contents delivery function, receiving contents data from the device and regenerating the received contents data on the display of the player 111. The contents-data format regenerable by the contents regenerating means 240 is limited, and in this embodiment, only a dynamic image in an MPEG2 format is regenerable. The detailed flow of a processing executed by the contents regenerating means 240 will be described in Fig. 16. As a player device having the above functions, there is a DMP (Digital Media Player) device defined by the DLNA.

Fig. 3 is a block diagram showing a software configuration of the gateway apparatus 120. A device publicizing means 310 responds to the device-finding request message transmitted by the server finding means 210 and transmits a message indicating a device having a contents delivery function. A software management framework 320 has the function of managing (installing, uninstalling, starting and stopping) software in the unit of a module called a bundle. It has the function of installing and uninstalling a bundle without restarting the whole system of a gateway apparatus. Such a software management framework is implemented by embodying an OSGi standard. A bundle group 330 is a bundle managed by the software management framework 320, and a single bundle is contained therein in this embodiment, but a plurality of bundles may be used. A dynamic-image site-A bundle 331 has the function of mediating between the dynamic-image site A and the player 111. A detailed configuration of the dynamic-image site-A bundle 331 will be described in Fig. 7 and a structure of a contents directory 340 will be described in Fig. 11.

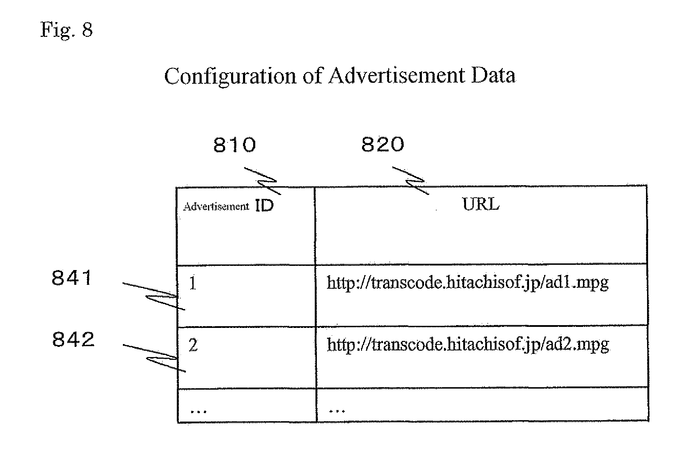

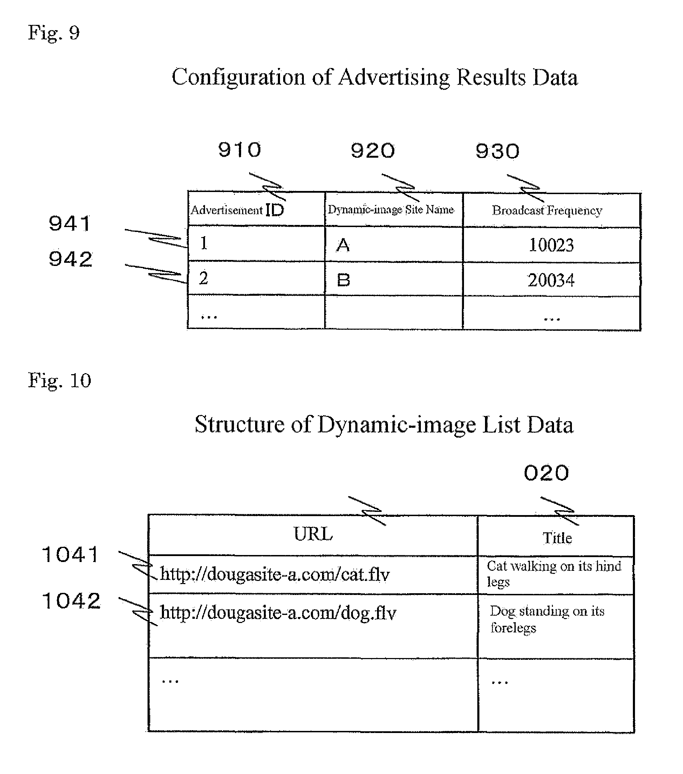

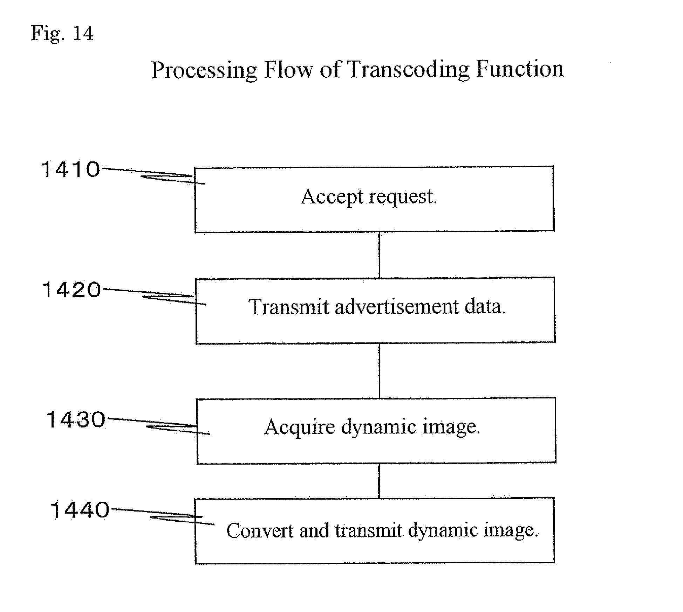

Fig. 4 is a block diagram showing a software configuration of the transcoding server 131. A transcoding means 410 has the function of acquiring a dynamic image from the Internet in response to a request from the gateway apparatus 120, converting the acquired dynamic image to an Mpeg2 format and returning it to the gateway apparatus 120. The details thereof will be described in Fig. 14. An advertisement inserting means 420 has the function of transmitting an advertising dynamic image stored in advertisement data 430 to the gateway apparatus 120. The advertisement data 430 is the set of pieces of dynamic-image data on an advertisement and is stored in the auxiliary storage device. A detailed configuration thereof will be described in Fig. 8. Advertising results data 440 is data on the utilization situation of advertisement data and is stored in the auxiliary storage device. A detailed configuration thereof will be described in Fig. 9.

Fig. 5 is a block diagram showing a software configuration of the device management server 132. A bundle delivering means 510 has the function of delivering a bundle to the gateway apparatus 120. Bundle data 520 is the set of bundles stored in the auxiliary storage device, and for example, various bundles are stored, such as a dynamic-image site-A bundle 521, a dynamic-image site-B bundle 522 and a device monitoring bundle 523.

Fig. 6 shows a software configuration of the server of the dynamic-image site A, B. A dynamic-image list providing means 610 has the function of providing dynamic-image list data in response to a request from the Internet. As an example of the request, there are a popular dynamic image, a frequently-regenerated dynamic image and the like. Dynamic-image sites may differ from each other in what kind of request each site has, a means for making a request and the format of dynamic-image list data. A request is transmitted, for example, using an HTTP and thereby is feasible. For example, a request origin sends an HTTP request such as http://dougasite-a.com/api.cgi?request=most_popular to a dynamic-image site. Using an argument "request=most_popular" given to a CGI program having the function of the dynamic-image list providing means 610 named api.cgi of the dynamic-image site, the dynamic-image list providing means 610 decides that the kind of request is a popular dynamic-image list and sends popular dynamic-image list data in replay. An example of dynamic-image list data will be described in Fig. 10.

The request origin which has acquired the dynamic-image list data specifies desired dynamic-image data and requests it from the dynamic-image site, and then, a dynamic-image delivering means 620 delivers the corresponding data of dynamic-image data 630.

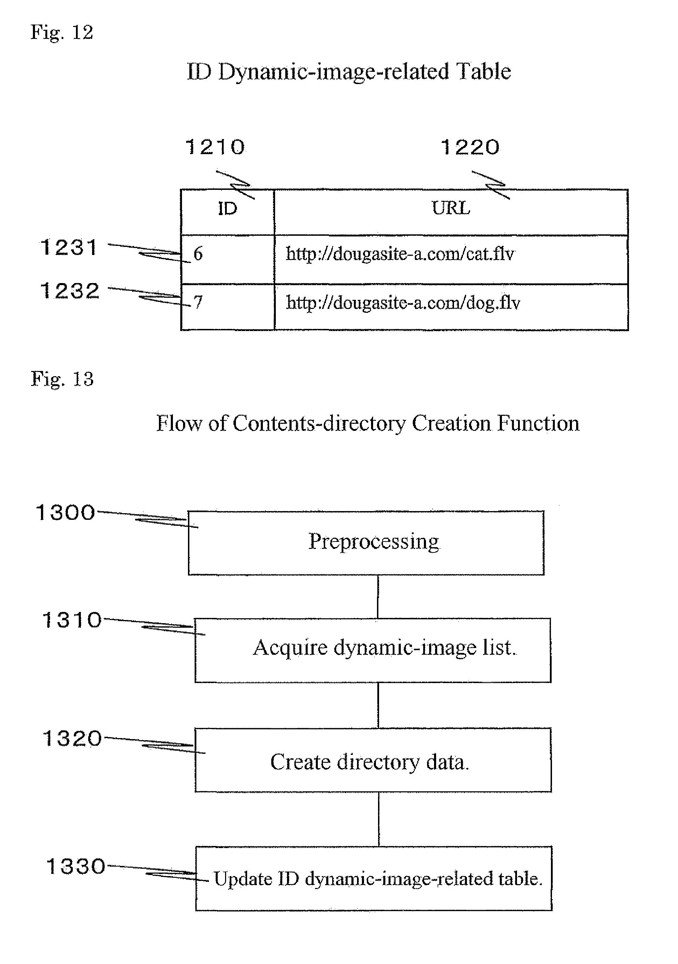

Fig. 7 shows a configuration of the dynamic-image site-A bundle 521. A contents-directory creating means (function) 710 is a means for acquiring dynamic-image list data from the dynamic-image site A and adding it to the contents directory 340. The details thereof will be described in Fig. 13. A dynamic-image acquiring/relaying means 720 is a means for relaying a dynamic-image acquirement request from the player 111 and executes the processing of 1620, 1660 in Fig. 16. An ID/dynamic-image-related table 730 is data for relating the contents directory 340 to a dynamic image in a dynamic-image site. A detailed configuration thereof will be described in Fig. 12.

Fig. 8 is a table showing a configuration of the advertisement data 430. An advertisement ID 810 is a unique integer given to an advertisement. AURL 820 is a URL indicating a place where an advertising dynamic image is stored. If the URL indicates a local file, then the advertisement data is stored in the transcoding server 131, or if the URL indicates a server on the Internet, then the advertisement data is located on the Internet.

Fig. 9 is a table showing a configuration of the advertising resultsdata440. An advertisement ID 910 is an advertisement ID existing in the advertisement data 430. A dynamic-image site name 920 indicates a dynamic image of which site was regenerated when an advertisement was transmitted. A broadcast frequency 930 indicates how many times an advertisement was regenerated. For example, a line 941 indicates that an advertisement corresponding to an advertisement ID 1 was regenerated 10023 times in relation to a dynamic-image site A.

Fig. 10 is a table showing a structure of dynamic-image list data. This structure is formed by the combination of a URL 1010 and a dynamic-image title 1020 corresponding to a URL. A structured language such as an XML may be used as the character-string representation of dynamic-image list data.

Fig. 11 shows a data structure of the contents directory 340. This data structure is formed by an ID 1110, a parent ID 1120, a type 1130, a name 1140 and a URL 1150, and a contents list is expressed with the directory structure. The ID 1110 is a unique ID of contents and the parent ID 1120 indicates a parent directory to which contents belong. The type 1130 indicates the format of contents, and the term "Directory" indicates that the corresponding line is a directory. The name 1140 indicates the name of contents or a directory and the URL 1150 indicates a place where contents are located. In Fig. 11, an example of the contents directory is below described. A line 1161 indicates the top directory, in which there is a directory having a name called "Dynamic-image site A". Lines 1162-1169 are child elements of the "Dynamic-image site A" directory because the parent IDs thereof are "0", and have three directories in storage. Lines 1165 and 1166 are child elements of the directory "Popular dynamic image" in the line 1162 and have in storage two lines indicating two Mpeg2 dynamic images. Lines 1167-1169 are child elements of the directory "Category" in the line 1164 and have three directories in storage.

Fig. 12 shows a configuration of an ID dynamic-image-related table 730. An ID 1210 indicates a dynamic image corresponding to the ID 1110 of the contents directory of Fig. 11. A URL 1220 indicates where a dynamic image is located on the Internet 130, and for example, a line 1231 corresponds to the line 1165 in Fig. 11.

Fig. 13 is a flow chart showing in detail the processing executed by the contents-directory creating means (function) 710. The contents-directory creating means holds already-created contents directory data as the contents directory 340 in the gateway apparatus 120. A description is below given using an example where it holds the contents directory data of the lines 1161-1164 of Fig. 11, and the input to the contents-directory creating means 710 is a directory name.

### <Step 1300>

If there is an entry having the parent ID 1120 identical to the ID 1110 corresponding to an inputted directory name, the entry is outputted and the processing is terminated.

For example, if the input is "Dynamic-image site A", then as canbe seen from the line 1161, the ID1110 corresponding to "Dynamic-image site A" is 0, thereby outputting the lines 1162-1164 each indicating that the parent ID is 0 and terminating the processing.

A description is below given in the case where the input to the contents-directory creating means 710 is "Popular dynamic image".

### <Step 1310>

Dynamic-image list data corresponding to the directory name is acquired from the dynamic-image site A. Inthisexample, the directory name is "Popular dynamic image", and hence, the dynamic-image list providing means 610 of the dynamic-image site A is called to acquire a popular dynamic-image list. A description is below given using an example where the data of Fig. 10 is acquired as the dynamic-image list data.

### <Step 1320>

A contents-directory data line is generated for each line of the dynamic-image list data of Fig. 10. A description is given using an example where the lines 1161-1164 are already created as the contents directory data and a processing for a line 1041 is executed. The processing is executed through the following (1)-(5).

### (1) Generation of ID 1110

An ID which does not exist in the already-created contents directory ID 1110 is generated. There is no "6" in the ID row of the lines 1161-1164, and hence, the ID 1110 is set to "6" this time.

### (2) Generation of Parent ID 1120

The ID of the line 1162 corresponding to the inputted directory name "Popular dynamic image" is "1", and hence, the parent ID 1120 is set to "1"_{.}

### (3) Generation of Type 1130

The type is set to a format operable by the player 111, and this time, "Mpeg2 dynamic image".

### (4) Generation of Name 1140

The name is set to "Cat walking on its hind legs" directly using the entry of 1020.

### (5) URL 1150

The URL 1150 is http: //<the address of a gateway apparatus (this time, set to 133.100.2.1.) >/content.cgi?id=<the value of the ID 1110>. This time, it is set to http://133.100.2.1)/content.cgi?id=6.

The above processing is executed to thereby generate a line 1165. In the same way, the processing (1) - (5) is executed for a line 1042 to thereby generate a line 1166.

### <Step 1330>

The ID dynamic-image-related table is updated. The URL 1220 is set to the same as the URL 1010 for each line of the dynamic-image list data of Fig. 10 and the ID 1210 is set to the ID generated in <Step 1320>(1), thereby obtaining the ID dynamic-image-related table shown in Fig. 12.

Finally, the lines generated in <Step 1320> are outputted, and this time, the lines 1165 and 1166 are outputted.

Fig. 14 is a flow chart showing a processing executed by the transcoding means 410.

### <Step 1410>

An acquirement request for a dynamic image is accepted from the gateway apparatus 120. A description is below given using an example where an acquirement request for a dynamic image of the dynamic-image site A is accepted.

### <Step 1420>

In reply to the request, an optional dynamic image stored in the advertisement data 430 is transmitted to the gateway apparatus. Even if the transmission is completed, the connection with the gateway apparatus 120 is kept unbroken.

After the transmission, the advertising results 440 are updated, and specifically, the corresponding broadcast frequency 930 is incremented. For example, if an acquirement request for a dynamic image of the dynamic-image site A is accepted and the dynamic image of the advertisement ID 1 is transmitted, the broadcast frequency 930 of the line 941 is incremented.

### <Step 1430>

The dynamic image accepted in <Step 1410> is acquired from the dynamic-image site A.

### <Step 1440>

The dynamic-image data acquired in <Step 1430> is converted to a format (this time, an Mpeg2 format) recognizable by the player 111 and is transmitted to the gateway apparatus 120.

Fig. 15 is a block diagram showing the contents-directory acquiring/displaying means 220. The figure shows, with screen images displayed in the player 111, a processing for the player 111 selecting contents desired to be regenerated using the contents-directory acquiring/displaying means 220. This time, the lines 1161-1164 are stored in advance as the initial configuration of the contents directory 340 in the gateway apparatus 120.

### <Screen image 1510>

Upon turning on the power of the player 111 and selecting a menu for viewing contents on a network by a remote control, the name of a server is displayed which is found by the server finding means 210. In the configuration of Fig. 1, in response to the server finding means 210, the device publicizing means 310 in the gateway apparatus 120 displays, as indicated by 1511, "the server name "contents server"".

### <Screen image 1520>

A selection of 1511 is made using the remote control or the like of the player 111. The gateway apparatus is notified of the selection of 1511. In replay, the gateway apparatus 120 sends a contents directory such as the line 1161 of Fig. 11, and thereby, 1521 is displayed.

### <Screen image 1530>

A selection of 1521 is made. The gateway apparatus is notified of the selection of 1521 and the name "Dynamic-image site A" of 1521. The gateway apparatus 120 gives the contents-directory creation function 710 of the dynamic-image site-A bundle 331 "Dynamic-image site A" as an input thereof. The lines 1162-1164 as an output thereof are sent to the player 111. As shown in <Screen image 1530>, the player 111 arranges the names 1140 of the lines 1162-1164 to thereby make them selectable by the remote control.

### <Screen image 1540>

A selection of 1532 is made. In the same way, the gateway apparatus is notified of the selection of 1532 and the name "Popular dynamic image" of 1532. The gateway apparatus 120 gives the contents-directory creation function 710 of the dynamic-image site-A bundle 331 "Popular dynamic image" as an input thereof. The lines 1165 and 1166 as an output thereof are sent to the player 111. As shown in <Screen image 1540>, the player 111 arranges the names 1140 of the lines 1165 and 1166 to thereby make them selectable by the remote control. Here, the type 1130 of the line 1165, 1166 corresponding to 1543, 1544, respectively, is "Mpeg2 dynamic image", thereby indicating that 1543, 1544 is a dynamic image. If such elements regarded as dynamic images are selected, the processing shifts to the contents regenerating means 240.

Fig. 16 shows a processing flow for regenerating contents using the contents regenerating means 240 and the above described means. In the processing flow, only a processing 1610 and a processing 1670 are executed by the contents regenerating means itself.

### <Processing 1610>

If the player 111 selects contents desired to be regenerated using the contents-directory acquiring/displaying means 220, the processing shifts to the contents regenerating means 240. The contents regenerating means is given the URL 1150 of the line of the contents directory data corresponding to the selected contents. For example, if 1543 is selected on <Screen image 1540>, the contents regenerating means 240 is given "http://133.100.2.1)/content.cgi?id=6" which is the URL 1150 of the line 1165. In response to this URL, the contents regenerating means sends an HTTP request. This time, the URL address "133.100.2.1" is the one of a gateway apparatus 1620 (refer to the description of <Step 1320> (5) in Fig. 13), and hence, the request is sent to the gateway apparatus 1620.

### <Processing 1620>

The gateway apparatus 1620 calls the dynamic-image acquiring/relaying means 720 of the dynamic-image site-A bundle. The dynamic-image acquiring/relaying means 720 extracts <numeral> from id=<numeral> of the URL under request, and then, extracts the URL 1220 matching with the ID 1210 of the ID dynamic-image-related table 730. This time, <numeral> is 6, and hence, the URL "http://dougasite-a.com/cat.flv" of the line 1231 is extracted. Then, a transcoding server 1630 is used as a http proxy, and a http get request for the extracted URL is transmitted to the transcoding server 1630.

### <Processing 1630><Processing 1640><Processing 1650>

Using the transcoding means 410 of the transcoding server 131, the dynamic image of the URL under request is acquired from the dynamic-image site A, is converted to a format (an mpeg2 format) regenerable by the player 111 and is transmitted to the gateway apparatus 1620.

### <Processing 1660><Processing 1670>

The dynamic image in the mpeg2 format is sent to the player 111 and is regenerated on the display thereof.

### Practical Example 1

The embodiment has illustrated an example where a dynamic image in the dynamic-image site A is acquired. In addition, a dynamic image in a new dynamic-image site B also becomes viewable in the player 111, without stopping the gateway apparatus 120. This canbe implemented only by allowing the bundle delivering means 510 of the device management server 132 to install a dynamic-image site bundle B having a similar function to a dynamic-image site bundle A (the dynamic-image site bundle B is different from the dynamic-image site bundle A in the respect of the dynamic-image list acquiring means at the step 1310 in the contents-directory creation function 710) using the software management framework 320 of the gateway apparatus 120.

### Industrial Applicability

The present invention is applicable to an apparatus, a system and a service for delivering a dynamic image, music and a static image in the fields of in-house broadcasting equipment, a household television, a home network, a household digital appliance and the like.

## Claims

1. A contents delivery apparatus which is provided as a gateway apparatus relaying communication between a dynamic-image site connected to the Internet and a player device connected to an in-house LAN and includes a CPU, a main storage device and two network communication interfaces, comprising:
a device publicizing means for receiving a device-finding request message from the player device and transmitting a message to the Internet in response to the request message;
a software-management framework means for managing software in a bundle unit;
a bundle group managed by the software-management framework means and made up of different bundles for each dynamic-image site, each bundle forming a mediating means between the dynamic-image site and the player device; and
a contents directory expressing a contents list with a directory structure,
wherein contents existing in an Internet dynamic-image site external to the in-house LAN are regenerable by acquiring a dynamic-image list from the dynamic-image site, converting dynamic-image list data into a contents directory and transmitting the contents directory to the player device.

2. A contents delivery apparatus which is provided as a server apparatus on the Internet to execute an intermediate processing between a dynamic-image site connected to the Internet and a gateway apparatus relaying communication between the dynamic-image site and a player device connected to an in-house LAN and includes a CPU, a main storage device and a network communication interface, comprising:
a contents-acquirement-request receiving means for receiving a contents acquirement request transmitted by the gateway apparatus when contents are selected from a contents list on the dynamic-image site displayed in the player device;
a contents acquiring means for acquiring the requested contents received by the contents-acquirement-request receiving means from the dynamic-image site;
a transcoding means for converting the contents acquired by the contents acquiring means to a format regenerable by the player device; and
a contents transmitting means for transmitting the data obtained by the conversion in the transcoding means to the gateway apparatus.

3. The contents delivery apparatus according to claim 2, further comprising a dynamic-image inserting means for inserting optional dynamic-image data when the contents transmitting means transmits contents to the gateway apparatus.

4. A contents delivery system which includes: a gateway apparatus relaying communication between a dynamic-image site connected to the Internet and a player device connected to an in-house LAN and having a CPU, a main storage device and two network communication interfaces; and a transcoding server apparatus provided on the Internet to execute an intermediate processing between the dynamic-image site and the gateway apparatus and having a CPU, a main storage device and a network communication interface, wherein:
the gateway apparatus includes
a device publicizing means for receiving a device-finding request message from the player device and transmitting a message to the Internet in response to the request message;
a software-management framework means for managing software in a bundle unit,
a bundle group managed by the software-management framework means and made up of different bundles for each dynamic-image site, each bundle forming a mediating means between the dynamic-image site and the player device, and
a contents directory expressing a contents list with a directory structure;
the transcoding server apparatus includes
a contents-acquirement-request receiving means for receiving a contents acquirement request transmitted by the gateway apparatus when contents are selected from a contents list on the dynamic-image site displayed in the player device,
a contents acquiring means for acquiring the requested contents received by the contents-acquirement-request receiving means from the dynamic-image site,
a transcoding means for converting the contents acquired by the contents acquiring means to a format regenerable by the player device, and
a contents transmitting means for transmitting the data obtained by the conversion in the transcoding means to the gateway apparatus; and
contents existing in an Internet dynamic-image site external to the in-house LAN are regenerable.
